Europäisches Patentamt

European Patent Office

Office européen des brevets

(19)

(11) Numéro de publication : **0 090 451**
**B1**

(12) **FASCICULE DE BREVET EUROPÉEN**

(45) Date de publication du fascicule du brevet :
**21.01.87**

(21) Numéro de dépôt : **83200367.7**

(22) Date de dépôt : **17.03.83**

(51) Int. Cl.⁴ : **C 08 L 27/06**, C 08 K 5/00,
C 08 K 5/09

(54) **Utilisation d'un sel de bismuth pour réduire la fumigénicité des compositions à base de polymères du chlorure de vinyle.**

(30) Priorité : **25.03.82 FR 8205275**

(43) Date de publication de la demande :
**05.10.83 Bulletin 83/40**

(45) Mention de la délivrance du brevet :
**21.01.87 Bulletin 87/04**

(84) Etats contractants désignés :
**AT BE CH DE FR GB IT LI LU NL SE**

(56) Documents cités :
**BE-A- 633 441**
**CH-A- 275 161**
**CHEMICAL ABSTRACTS, vol. 66, 1967, page 6260, no. 66220r, Columbus Ohio USA;**
**CHEMICAL ABSTRACTS, vol. 92, no. 8, 25 février 1980, page 37, no. 59730r, Columbus Ohio USA;**

(73) Titulaire : **SOLVAY & Cie (Société Anonyme)**
**Rue du Prince Albert, 33**
**B-1050 Bruxelles (BE)**

(72) Inventeur : **Hannecart, Etienne**
**Arboretumlaan, 38**
**B-1980 Tervueren (BE)**

EP 0 090 451 B1

## Description

La présente invention concerne l'utilisation d'un sel de bismuth pour réduire la fumigénicité des compositions à base de polymères du chlorure de vinyle.

Les polymères du chlorure de vinyle sont difficilement inflammables et auto-extinguibles. Il est cependant de pratique courante d'y incorporer, avant mise en œuvre, des additifs retardateurs de flamme en vue d'améliorer encore leur résistance à l'inflammation. Néanmoins, les retardateurs de flamme sont généralement inaptes à empêcher totalement la combustion à température élevée des objets façonnés en polymères du chlorure de vinyle. Par ailleurs, la réduction de la fumigénicité, c'est-à-dire de l'aptitude à engendrer de la fumée par combustion, et le retard à l'inflammation d'une composition polymérique sont deux phénomènes différents qui n'ont pas de relation directe entre eux, à tel point que certains composés retardateurs de flamme agissent comme des générateurs de fumée, une fois que la combustion a effectivement commencé.

La fumée noire engendrée par la combustion d'objets façonnés à partir de compositions à base de polymères du chlorure de vinyle est actuellement considérée comme un inconvénient aussi grave que les flammes elles-mêmes, dans la mesure où elle rend plus difficile l'intervention des secours.

Dans le brevet FR-A-2 236 893 (Ferro Corporation), on préconise l'emploi de composés très divers de fer et de zinc pour réduire la fumigénicité des polymères du chlorure de vinyle. Bon nombre de ces composés de zinc et de fer conduisent à une réduction insignifiante de la fumigénicité des compositions rigides et sont donc d'application limitée, en pratique, aux compositions souples (plastifiées). De plus, bon nombre de ces composés sont fortement colorés ou induisent des colorations.

Dans le brevet BE-A-871 924 (The B. F. Goodrich Company), on décrit l'utilisation de sels inorganiques spécifiques notamment de bismuth (borate, iodure, oxycarbonate et phosphate) pour réduire la fumigénicité des compositions à base de polymères du chlorure de vinyle. Ces sels inorganiques de bismuth sont aptes à réduire la fumigénicité des compositions tant rigides que souples. Toutefois, ils présentent encore l'inconvénient, par suite de leur manque de dispersibilité dans les polymères du chlorure de vinyle, de conduire à des résultats peu reproductibles et, par ailleurs, perfectibles.

Dans le brevet CH-A-275 161, on décrit la stabilisation thermique des polymères du chlorure de vinyle à l'intervention de sels de bismuth d'acides organiques quelconques, choisis indifféremment parmi les acides aliphatiques, saturés ou insaturés, et les acides aromatiques. Le fait qu'un composé soit un stabilisant thermique des compositions à base de polymères du chlorure de vinyle, n'implique nullement qu'il ait la propriété de réduire efficacement leur fumigénicité, la stabilisation thermique et la réduction de la fumigénicité procédant de mécanismes différents.

La présente invention, telle qu'elle est caractérisée dans les revendications, a pour but de procurer des compositions à base de polymères du chlorure de vinyle présentant une fumigénicité réduite et qui ne présentent pas les inconvénients des compositions connues.

Selon l'invention, on utilise, à titre de réducteur de fumée, un sel de bismuth dérivé d'un acide carboxylique aliphatique $\alpha,\beta$ éthyléniquement insaturé contenant 10 atomes de carbone au plus, à l'exception des acides maléique et crotonique. On peut également utiliser un mélange de pareils sels.

Les acides carboxyliques aliphatiques $\alpha,\beta$ éthyléniquement insaturés dont sont dérivés les sels de bismuth utilisables selon l'invention peuvent être n'importe quels acides mono-, di- et polycarboxyliques contenant une insaturation éthylénique en position $\alpha,\beta$. On donne néanmoins la préférence aux acides mono- et dicarboxyliques $\alpha,\beta$ éthyléniquement insaturés et plus particulièrement encore à ceux contenant de 3 à 6 atomes de carbone. A titre d'exemples de pareils acides, on peut mentionner les acides acrylique, méthacrylique, isocrotonique, angélique, 2-hexénoïque, fumarique, isohydrosorbique et sorbique. Parmi ceux-ci, l'acide acrylique a conduit aux meilleurs résultats.

La fabrication des sels de bismuth utilisables selon l'invention ne pose aucun problème particulier. On peut, par exemple, les fabriquer par mise en réaction, dans l'eau et à température ambiante, de quantités stoéchiométriques d'hydroxyde de bismuth et d'acide carboxylique aliphatique $\alpha,\beta$ éthyléniquement insaturé, suivie de la filtration du sel de bismuth.

En plus du sel de bismuth, les compositions peuvent contenir tous les additifs usuels des polymères du chlorure de vinyle, tels que des stabilisants thermiques, des lubrifiants, des plastifiants, des réducteurs de flamme, des charges etc. L'invention concerne donc aussi bien la réduction de la fumigénicité des compositions rigides que des compositions souples (plastifiées) à base de polymères du chlorure de vinyle.

La quantité de sel de bismuth présente dans les compositions peut varier dans une large mesure, notamment en fonction du résultat visé et de la nature et de la quantité des divers additifs entrant dans les compositions. Habituellement, on utilise le sel de bismuth à raison de 1 à 10 parties en poids au total, exprimées en bismuth métallique, pour 100 parties de polymère du chlorure de vinyle. De préférence, on l'utilise à raison de 2,5 à 5 parties en poids au total, exprimées en bismuth métallique.

Suivant un mode de réalisation tout particulièrement préféré de la présente invention, on utilise donc un acrylate de bismuth à raison d'environ 2,5 à 5 parties en poids au total, exprimées en bismuth métallique, pour 100 parties de polymère du chlorure de vinyle.

Par polymère du chlorure de vinyle, on entend désigner tous les polymères contenant au moins 50 %

2

molaires, et de préférence au moins 70 % molaires, d'unités monomériques dérivées du chlorure de vinyle. Les polymères du chlorure de vinyle qui conviennent à la réalisation des compositions comprennent donc aussi bien les homopolymères du chlorure de vinyle que ses copolymères contenant des unités monomériques dérivées d'un ou de plusieurs comonomères. Ces copolymères peuvent être des copolymères statistiques, des copolymères à blocs ou encore des copolymères greffés sur un tronc quelconque. A titre d'exemples de comonomères du chlorure de vinyle, on peut citer les oléfines telles que l'éthylène, le propylène et le styrène, les esters tels que l'acétate de vinyle et les acrylates et les méthacrylates d'alkyle, les dérivés vinylidéniques tels que le chlorure et le fluorure de vinylidène. De préférence, les compositions sont à base d'homopolymères du chlorure de vinyle. Le mode de fabrication des polymères du chlorure de vinyle mis en œuvre peut être quelconque. On peut donc utiliser indifféremment pour la fabrication des compositions des polymères du chlorure de vinyle obtenus par la polymérisation en masse, en phase gazeuse, en solution ou encore en émulsion ou en suspension aqueuses.

Pour préparer les compositions à fumigénicité réduite, le sel de bismuth peut être mis en œuvre sous n'importe quelle forme, poudre ou dispersion aqueuse par exemple. Cependant, pour des raisons de commodité, on préfère le mettre en œuvre sous la forme d'une poudre. Dans ce cas, il est avantageux d'utiliser des poudres ayant une dimension de particules moyenne inférieure à environ 200 $\mu$m. De préférence, celle-ci est comprise entre environ 1 et 100 $\mu$m et plus particulièrement encore entre environ 1 et 50 $\mu$m.

La préparation des compositions ne présente pas de problème particulier, toutes les techniques habituelles de préparation de ces compositions peuvent être utilisées. Ainsi, on peut mélanger le sel de bismuth avec le polymère de vinyle dès le stade de la polymérisation, soit par introduction directe dans le milieu de polymérisation, en fin de polymérisation, soit encore par addition au gâteau humide obtenu par essorage ou filtration de la dispersion aqueuse venant de polymérisation. Un mode opératoire particulièrement avantageux consiste à ajouter le sel de bismuth au polymère du chlorure de vinyle se trouvant sous la forme d'une poudre lors de la fabrication d'un prémélange, en même temps que les autres additifs entrant dans la composition. On peut aussi introduire le sel de bismuth directement dans les appareils où le polymère de chlorure de vinyle est fondu tels que les extrudeuses à vis.

Les compositions à base de polymères du chlorure de vinyle comprenant un sel de bismuth à titre de réducteur de fumée sont aptes à être mises en œuvre par tous les procédés classiques de transformation des matières plastiques. Elles conviennent tout particulièrement pour la fabrication d'objets façonnés, tant souples que rigides, destinés à être utilisés dans des domaines d'application des polymères du chlorure de vinyle où une réduction notable de la fumigénicité des objets façonnés est intéressante, tels que les industries du bâtiment (tuyaux, gaines, châssis, volets, bardages de façades) et de l'ameublement (tapis et revêtements muraux).

Les exemples qui suivent illustrent l'invention.

Les exemples 1 à 4, selon l'invention, illustrent l'utilisation d'acrylate de bismuth.

Les exemples 5 et 6, de comparaison, illustrent l'utilisation de cinnamate de bismuth.

L'exemple 7, de comparaison, illustre l'utilisation de laurate de bismuth.

Dans les exemples 1, 2, 5, 6 et 7, on a évalué des compositions rigides (formulation A). Dans les exemples 3 et 4, on a évalué des compositions souples (formulation B).

Les formulations A et B évaluées ont la composition suivante, les quantités étant exprimées en poids :

### Formulation A

| polychlorure de vinyle | 100 |
| --- | --- |
| phosphite dibasique de plomb | 2 |
| stéarate dibasique de plomb | 1,50 |
| stéarate de calcium | 0,50 |
| carbonate de calcium précipité | 10 |
| agent de mise en œuvre | 1 |
| acide stéarique | 0,1 |
| oxyde de titane | 7 |
| sel de bismuth | voir Tableau I |

### Formulation B

| polychlorure de vinyle | 100 |
| --- | --- |
| phtalate de di-éthylhexyle | 55 |
| sulfate tribasique de plomb | 3 |
| stéarate de calcium | 1 |
| carbonate de calcium naturel | 35 |
| sel de bismuth | voir Tableau I |

**0 090 451**

Les compositions rigides (exemples 1, 2, 5, 6 et 7) ont été préparées par mélange de tous les ingrédients et malaxage du mélange à 160 °C pendant 5 minutes, après quoi on a pressé des plaques par pressage du crêpe à 180 °C pendant 1 minute sous une pression de 10 MPa.

Les compositions souples (exemples 3, 4 et 6) ont été préparées par un mélange de tous les ingrédients de malaxage du mélange à 150 °C pendant 5 minutes, après quoi on a pressé des plaques par pressage du crêpe à 150 °C pendant 1 minute sous une pression de 5,5 MPa.

On a également préparé, dans les mêmes conditions, des plaques à partir des formulations A et B, sans sel de bismuth.

L'évaluation de la fumigénicité a été effectuée, sur des éprouvettes découpées dans les plaques pressées, à 500 °C sous un débit d'air de 300 litres/heure suivant la norme française enregistrée NF T51-073 de septembre 1977. Dans chacune des plaques pressées, on a découpé trois éprouvettes dont la masse a été choisie au cours d'un essai préliminaire pour que la densité optique maximale ne dépasse pas 2,5 au cours de l'essai de combustion. Toutes les éprouvettes correspondant à la formulation A (exemples 1, 2, 5, 6, 7 et la formulation A sans sel de bismuth) pesaient 470 mg. Toutes les éprouvettes correspondant à la formulation B (exemples 3, 4 et la formulation B sans sel de bismuth) pesaient 244 mg.

Pour chacune des éprouvettes, on a enregistré la courbe de densité optique en fonction du temps. A partir de ces courbes, on a défini :

— l'unité conventionnelle de quantité de fumée U, à savoir, la quantité de fumée correspondant à une densité optique égale à 1 pendant une durée de 1 minute ;

— la quantité totale de fumée émise au cours de l'essai, S, exprimée en unités conventionnelles.

A partir de ces données, on a calculé pour chacune des éprouvettes l'indice de fumée F, F étant égal à S/m, m étant la masse de l'éprouvette exprimée en g et on a fait la moyenne pour les trois éprouvettes.

L'abattement de fumée, exprimé en %, a ensuite été calculé suivant la formule :

$$\frac{F - F_o}{F_o} \times 100,$$

dans laquelle

F = indice de fumée moyen de l'échantillon examiné

$F_o$ = indice de fumée moyen d'un échantillon de référence sans sel de bismuth. L'indice de fumée $F_o$ moyen de la formulation A (sans sel de bismuth) est de 5,07. L'indice de fumée moyen $F_o$ de la formulation B (sans sel de bismuth) est de 10,20.

Dans le Tableau I, en annexe, sont consignés la nature et la quantité de sel de bismuth utilisé, ainsi que l'abattement de fumée pour chaque composition.

### Tableau I

| N° de l'exemple | Sel de bismuth | | | Formu-lation | Abattement de fumée, % |
|---|---|---|---|---|---|
| | Nature | Quantité | | | |
| | | en prc * | en g de Bi/ 100 g de PVC | | |
| 1 | acrylate | 6 | 2,97 | A | 38 |
| 2 | acrylate | 10 | 4,95 | A | 48 |
| 3 | acrylate | 6 | 2,97 | B | 42 |
| 4 | acrylate | 10 | 4,95 | B | 46 |
| 5 | cinnamate | 10 | 3,21 | A | 16 |
| 6 | cinnamate | 15.6 | 5,00 | A | 0 |
| 7 | laurate | 10 | 2,80 | A | 29 |

* Parties en poids pour cent parties de résine.

### Revendications

1. Utilisation d'un sel de bismuth pour réduire la fumigénicité des compositions à base de polymères du chlorure de vinyle, caractérisée en ce que le sel de bismuth est un sel de bismuth dérivé d'un acide carboxylique aliphatique $\alpha,\beta$ éthyléniquement insaturé contenant 10 atomes de carbone au plus à l'exception des acides maléique et crotonique.

2. Utilisation selon la revendication 1, caractérisée en ce que le sel de bismuth dérive d'un acide monocarboxylique aliphatique $\alpha,\beta$ éthyléniquement insaturé.

3: Utilisation selon la revendication 1, caractérisée en ce que le sel de bismuth dérive d'un acide dicarboxylique aliphatique $\alpha,\beta$ éthyléniquement insaturé.

4. Utilisation selon l'une quelconque des revendications 1 à 3, caractérisée en ce que le sel de bismuth dérive d'un acide carboxylique contenant de 3 à 6 atomes de carbone.

5. Utilisation selon l'une quelconque des revendications 1, 2 et 4, caractérisée en ce que le sel de bismuth est de l'acrylate de bismuth.

6. Utilisation selon la revendication 1, caractérisée en ce que le sel de bismuth est utilisé à raison de 1 à 10 parties en poids, exprimées en bismuth métallique, pour 100 parties de polymère du chlorure de vinyle.

7. Utilisation selon la revendication 7, caractérisée en ce que le sel de bismuth est utilisé à raison de 2,5 à 5 parties en poids, exprimées en bismuth métalliques, pour 100 parties de polymère du chlorure de vinyle.

8. Utilisation selon la revendication 1, caractérisée en ce que le polymère du chlorure de vinyle est un homopolymère du chlorure de vinyle.

## Claims

1. Use of a bismuth salt for reducing the smoke-producing property of compositions based on vinyl chloride polymers, characterized in that the bismuth salt is a bismuth salt derived from an $\alpha,\beta$-ethylenically unsaturated aliphatic carboxylic acid containing not more than 10 carbon atoms, with the exception of maleic and crotonic acids.

2. Use according to Claim 1, characterized in that the bismuth salt is derived from an $\alpha,\beta$-ethylenically unsaturated aliphatic monocarboxylic acid.

3. Use according to Claim 1, characterized in that the bismuth salt is derived from an $\alpha,\beta$-ethylenically unsaturated aliphatic dicarboxylic acid.

4. Use according to any one of Claims 1 to 3, characterized in that the bismuth salt is derived from a carboxylic acid containing from 3 to 6 carbon atoms.

5. Use according to any one of Claims 1, 2 and 4, characterized in that the bismuth salt is bismuth acrylate.

6. Use according to Claim 1, characterized in that the bismuth salt is used at a rate of 1 to 10 parts by weight, expressed as metallic bismuth, for 100 parts of the vinyl chloride polymer.

7. Use according to Claim 6, characterized in that the bismuth salt is used at a rate of 2.5 to 5 parts by weight, expressed as metallic bismuth, for 100 parts of the vinyl chloride polymer.

8. Use according to Claim 1, characterized in that the vinyl chloride polymer is a homopolymer of vinyl chloride.

## Patentansprüche

1. Verwendung eines Wismutsalzes für die Reduzierung der Rauchentwicklung von Zusammensetzungen auf der Basis von Vinylchloridpolymeren, dadurch gekennzeichnet, daß das Wismutsalz ein Wismutsalz ist, das von einer aliphatischen, $\alpha,\beta$-ethylenartig ungesättigten Carbonsäure, die höchstens 10 Kohlenstoffatome enthält, mit Ausnahme von Maleinsäure und Crotonsäure, abstammt.

2. Verwendung nach Anspruch 1, dadurch gekennzeichnet, daß das Wismutsalz von einer aliphatischen, $\alpha,\beta$-ethylenartig ungesättigten Monocarbonsäure abstammt.

3. Verwendung nach Anspruch 1, dadurch gekennzeichnet, daß das Wismutsalz von einer aliphatischen, $\alpha,\beta$-ethylenartig ungesättigten Dicarbonsäure abstammt.

4. Verwendung nach einem der Ansprüche 1 bis 3, dadurch gekennzeichnet, daß das Wismutsalz von einer Carbonsäure enthaltend 3 bis 6 Kohlenstoffatome abstammt.

5. Verwendung nach einem der Ansprüche 1, 2 und 4, dadurch gekennzeichnet, daß das Wismutsalz Wismut-Acrylat ist.

6. Verwendung nach Anspruch 1, dadurch gekennzeichnet, daß das Wismutsalz zu 1 bis 10 Gewichtsteile, ausgedrückt in metallischem Wismut, pro 100 Teile Vinylchloridpolymer verwendet wird.

7. Verwendung nach Anspruch 7, dadurch gekennzeichnet, daß das Wismutsalz zu 2,5 bis 5 Gewichtsteile, ausgedrückt in metallischem Wismut, pro 100 Teile Vinylchloridpolymer verwendet wird.

8. Verwendung nach Anspruch 1, dadurch gekennzeichnet, daß das Vinylchlorid-Polymer ein Vinylchlorid-Homopolymer ist.